Europäisches Patentamt

European Patent Office

Office européen des brevets

(11) Publication number: **0 235 994**
A1

(12) **EUROPEAN PATENT APPLICATION**

(21) Application number: 87301293.4

(22) Date of filing: 13.02.87

(51) Int. Cl.⁴: **F 16 D 65/54**, F 16 D 55/18, B 60 T 11/30

(30) Priority: 01.03.86 GB 8605135

(71) Applicant: LUCAS INDUSTRIES public limited company, Great King Street, Birmingham, B19 2XF West Midlands (GB)

(72) Inventor: Price, Anthony George, 14 Meadow Lane Croseyceiliog, Cwmbran, Gwent NP44 2EY Wales (GB)
Inventor: Campbell, Roy, The Corner House 1 Marlbrook Lane, Licky Rock Bromsgrove Worcestershire (GB)

(74) Representative: Spall, Christopher John et al, BARKER, BRETTELL & DUNCAN 138 Hagley Road, Edgbaston Birmingham B16 9PW (GB)

(43) Date of publication of application: 09.09.87
Bulletin 87/37

(84) Designated Contracting States: DE FR GB IT

(54) Improvements in self-energising disc brakes.

(57) The hydraulic actuator (6) of a spreading brake incorporates an automatic slack adjuster (20) of the 'one-shot' type which acts between the two piston (11, 12). The adjuster (20) can be re-set by manipulation of a release member (33, 35) which cooperates with, or forms a part of, a bleed screw (30) screwed into a radial bore (31) in the wall of the cylinder (9).

EP 0 235 994 A1

1

# IMPROVEMENTS IN SELF-ENERGISING DISC BRAKES

This invention relates to self-energising disc brakes of the kind in which rotatable friction discs provided with linings of friction material are adapted to be brought into engagement with spaced opposed braking surfaces in a housing by pressure plates located between the frictions discs and centred by a stationary pilot lug, balls or rollers are located in co-operating oppositely inclined angularly spaced recesses in the adjacent faces of the pressure plates, and the application of the brake is initiated by moving the pressure plates angularly in opposite directions, the pressure plates then moving apart from a tendency for the balls or rollers to ride up ramps defined by the edges of the recesses so that the pressure plates move into engagement with the friction discs which are urged, in turn, into engagement with the braking surfaces, the pressure plates being carried round with the friction discs until one is arrested by the engagement of a lug on the plate with a drag-taking stop abutment in the housing, and the continued angular movement of the other pressure plate provided a servo action, the pressure plates being moved angularly in opposite directions by means of an actuator comprising an hydraulic piston and cylinder assembly of which the main axis is tangential to the axis of the plates.

Self-energising brakes of the kind set forth may be dry or they may be of the liquid cooled type, and such brakes are commonly used in tractors and like vehicles and are hereinafter called brakes of the kind set forth.

In brakes of the kind set forth it is desirable to incorporate means for automatically adjusting the relative positions of the pressure plates to compensate for wear of the friction linings, and, for convenience, such means should be installed within the piston and cylinder assembly.

Japanese Patent Publication No. 59-200823 discloses an hydraulic piston and cylinder assembly for a brake incorporating an automatic adjuster comprising an axially extending adjuster member having a pawl and ratchet engagement with the piston, and a lost-motion connection with the cylinder body in which the piston works. After the lost-motion has been taken up in the application of the brake, the pawl rides over at least one ratchet tooth to determine, upon release of the brake, a new relative position for the pawl and ratchet, in turn to determine an adjusted relative position between the piston and the cylinder body. The pawl is carried by the piston, and ratchet teeth are provided on the adjuster member. The adjuster includes re-set means for releasing the ratchet and pawl mechanism to enable the adjuster to be re-set. The re-set means comprises an axially extending member which extends axially through a bore in the piston and incorporates a conical head engageable with an asymmetrically arranged opening in the pawl, whereby axial movement of the member imparts a radial movement to the pawl, by the co-operation of the head with the opening.

According to our invention in a disc brake of the kind set forth an automatic adjuster acts between the two relatively movable components of the assembly to determine their relative positions and, in turn, the relative positions of the pressure plates, the automatic adjuster comprising an axially extending adjuster member having a pawl and ratchet engagement with one of the components, and a lost-motion connection with the other of the components, relative movement between the two components in a first direction through a distance greater than that required to take up the lost-motion, and indicative of excessive wear of the friction linings, causing the pawl to ride over one ratchet tooth, whereafter upon release of the brake, the new relative positions of the pawl and the ratchet determine an adjusted release position for the components, and bias and release means operative normally to maintain said pawl and ratchet engagement are releasable from the exterior of the piston and cylinder assembly to permit release of said pawl and ratchet engagement, whereafter the two components can be moved in a second direction opposite to the first to enable the adjuster to be re-set, the bias and release means comprising a member which projects through a radial bore in the wall of the cylinder and co-operates with the adjuster member.

We therefore provide a simple construction.

The member defining the bias and release means may co-operate with the adjuster member, either directly, or indirectly through a spring-loaded strut.

In either construction the member may have a screw-threaded engagement in the radial bore so that the pawl and ratchet engagement can be released simply by unscrewing the member in a relatively outwards direction.

Conveniently the member may comprise a forward extension on a conventional bleed screw, and the presence of such a member will minimise the effective fluid volume of the piston and cylinder assembly, thereby improving bleeding of the hydraulic system.

0235994

When the piston and cylinder assembly comprises first and second opposed pistons working in a common bore in a cylinder, the adjuster member is formed at one end with a pawl for releasable engagement with ratchet teeth in an internal blind bore in one of the pistons, and at the opposite end with radial flange or head received in a recess in the adjacent inner end of the other piston, the bias and release means normally acting to bias the adjuster member to one side of the main axis of the cylinder bore to effect engagement of the pawl with the teeth and retain the flange or head in the recess normally spaced from an inwardly directed radial flange at its inner end to define the said lost-motion connection.

Two embodiments of the invention are illustrated in the accompanying drawings in which:-

Figure 1 is a longitudinal section through an hydraulic actuator including portions of the pressure plates and friction discs of a brake of the kind set forth;

Figure 2 is a section on the line 2-2 of Figure 1; and

Figure 3 is a section similar to Figure 2 but showing a different automatic adjuster.

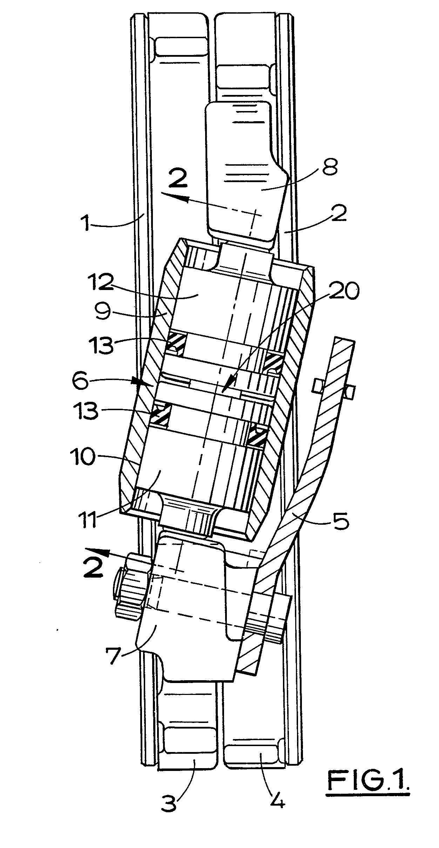

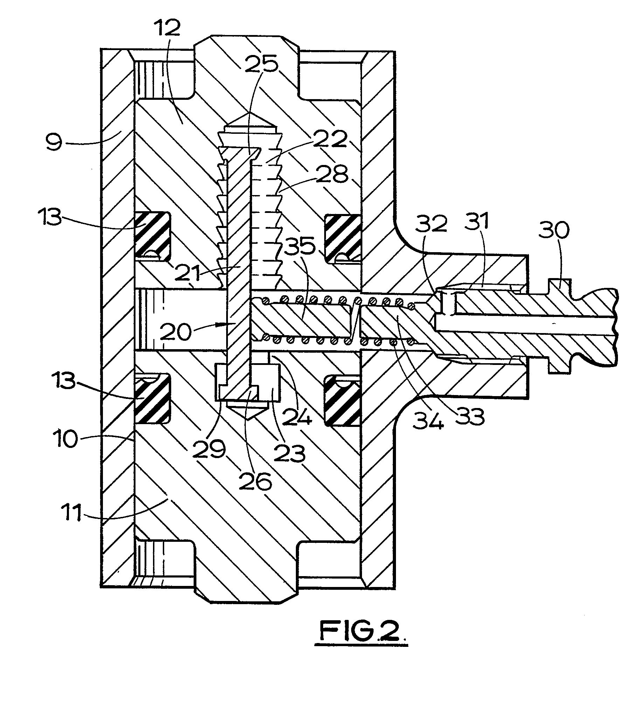

A brake of the spreading type of which a portion is illustrated in Figure 1 and 2 the drawings comprises a pair of rotatable frictions 1, 2 provided on opposite sides with linings of friction material which are adapted to be brought into engagement with spaced opposed radial surfaces in a housing by pressure plates 3, 4 located between the discs and centred by three angularly spaced stationary pilots and urged towards each other by tension return springs coupled to the plates at opposite ends. Balls or rollers are located in co-operating oppositely inclined recesses in the opposite faces of the pressure plates which are adjacent in the brake.

The application of the brake is initiated by moving the pressure plates 3, 4 angularly in opposite directions which causes the pressure plates to move axially relatively away from each other due to the tendency for the balls or rollers to ride up ramps defined by the end faces of the recesses. This urges the friction discs 1, 2 into engagement with the faces in the housing. The pressure plates 3, 4 are then carried round with the discs 1, 2 until one is arrested by the engagement of a lug on a respective plate and with a drag-taking abutment whereafter continued angular movement of the other plate provides a servo action.

The brake is applied mechanically for parking or in an emergency by a pull-rod (not shown) which extends through a radial opening in the housing and is coupled to a bell-crank lever 5 which acts between lugs on the two pressure plates 3, 4.

For normal service braking the brake is applied hydraulically by an hydraulic actuator 6 which acts between lugs 7, 8 on the respective pressure plates.

The hydraulic actuator 6 comprises a cylinder 9 which is carried from the housing of the brake and has a longitudinally extending open-ended bore 10 in which work a pair of opposed pistons 11, 12 each provided with a seal 13 adjacent to its inner end. The axis of the cylinder 9 is tangential to the pressure plates 3, 4 and lies in a plane which is angled with respect to a transverse plane parallel to the plane of each plate.

An automatic slack adjuster 20 is incorporated in the actuator 6. As illustrated the adjuster 20 comprises an adjuster member 21 of circular outline which extends at one end by a substantial distance in to a blind bore 22 in the piston 12, and at the other end into a recess 23 in the inner end of the piston 11 and of which the diameter is greater than the internal diameter of an inwardly projecting shoulder 24 at its inner end. The adjuster member 21 is provided at opposite ends with heads 25 and 26.

The head 25 has an inclined peripheral edge 27 which converges in a direction towards the head 26 and defines a pawl for releasable engagement with one of a plurality of ratchet teeth 28 provided in the bore 22. The ratchet teeth 28 may be of annular outline, or formed as a helix.

The head 26 is movable, upon separation of the pistons 11, 12, between a retracted position in which it engages with an abutment face 29 at the inner end of the recess to define the relative retracted positions of the pistons 11, 12, and an advanced position in which it engages with the inner face of the shoulder 24. The head 26 and the recess 23 define a lost-motion coupling between the two pistons 11, 12.

A bleed screw 30 screwed through a threaded portion of a radial bore 31 in the cylinder 9 for engagement with a valve seating 32 incorporates a forward extension 33. The extension 33, in turn, acts through a compression spring 34 and a thrust member 35 to apply a bias force to the adjuster member 21 in a radial direction to urge the pawl 25 into engagement with one of the teeth 28 and the member itself into the edge of the shoulder 24 to prevent tilting. When the bleed screw 30 is screwed home into engagement with the seating 32, the force in the spring 34 is sufficient to hold the pawl 25 in engagement with the tooth and the member 21 in engagement with the shoulder 24 as aforesaid.

When the brake is applied manually relative movement of the pistons 11 and 12 away from each other will be insufficient to take up the lost-motion between the head 26 and the shoulder 24 and cause the pawl 25 to slide on the tooth with which it is in engagement, through a distance sufficient to cause engagement with the next successive tooth. Thus, upon release of the brake, the pistons 11 and 12 will be returned to their initial positions by the force in the return springs of the brake, and no adjustment will take place.

However, in the event of the friction linings wearing, upon operation of the brake the relative movement between the pistons will be sufficient to take up the lost-motion and cause the pawl 25 to engage with the next successive tooth. Upon subsequent release of the brake the pistons 11 and 12 will be returned to a retracted position but in which the relative spacing between the pistons 11, 12 has been increased by incremental distance equivalent to the pitch of the teeth.

To re-set the adjuster 20 when the friction linings have to be replaced or renewed, the bleed screw 30 is unscrewed from the cylinder 9. This reduces the loading from the spring and permits the pawl 25 to disengage from the teeth, whereafter the two pistons 11 and 12 can be pushed back towards each other. The bleed screw 30 is then screwed home again to cause re-engagement of the pawl 25 with the teeth 28.

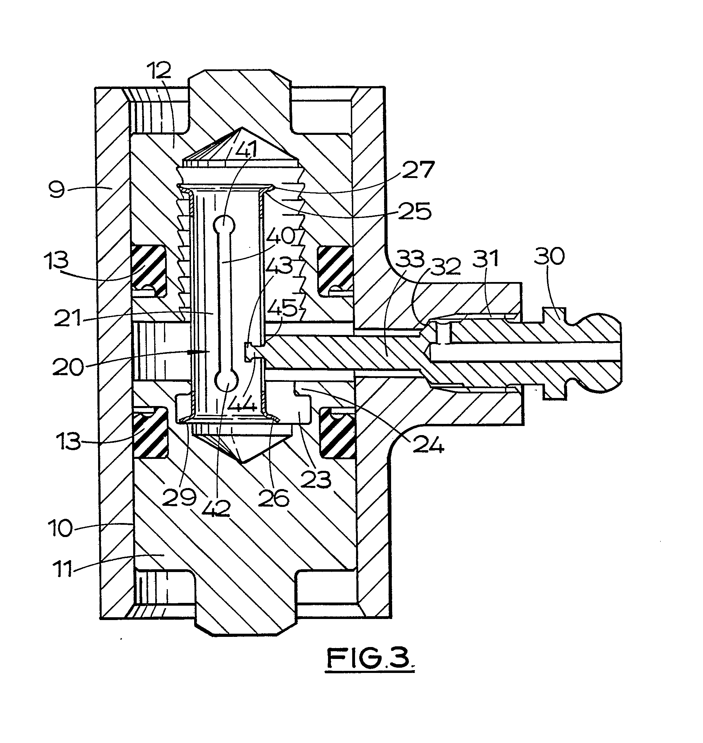

In the construction illustrated in Figure 3 of the drawings the adjuster member 21 is of a cylindrical tubular construction provided at opposite ends with radial flanges which define the pawl 25 and the head 26, respectively. The member 21 is provided with a series of angular spaced elongate key-hole slots 40 each provided at opposite ends with part circular portions 41, 42.

The forward extension 33 on the bleed screw 30 is increased in length and at its forward end is provided with a head 43 of reduced diameter, slightly smaller than that of each portion in 41, 42, which is carried from the free ends of a stem 44 of which the diameter is slightly less than the width of each slot 40.

In assembling the adjuster, the head 43 is passed through the portion 42 of a respective slot 40, and when the bleed screw 30 screwed home, a shoulder 45 between the extension 33 and the stem 44 applies a light pressure to the member 41 which is sufficient to cause the pawl 25 to engage with one of the teeth but insufficient to impede sliding movement of the member 21 with respect shoulder 45 or sliding movement of the pawl over a tooth so that it can engage with the next successive tooth.

0235994

As the pistons 11 and 12 separate when the brake is applied and during adjustment, the slot 40 slides with respect to the respective stem 44. At a fully adjusted position to head 43 will coincide with the portion 41 so that, if necessary, the bleed screw 30 can be uncoupled from the member and, if desired, totally removed from the brake. Otherwise unscrewing the bleed screw slightly will be sufficient to enable the pawl to disengage from the teeth 25, thereby enabling the adjuster to be re-set.

The construction and operation of the adjuster of Figure 3 is otherwise the same as that of Figures 1 and 2 and corresponding reference numerals have been applied to corresponding parts.

CLAIMS:

1. A self-energising disc brake in which rotatable friction discs (1, 2) provided with linings of friction material are adapted to be brought into engagement with spaced opposed braking surfaces in a housing by pressure plates (3, 4) located between the frictions discs and centred by a stationary pilot lug, balls or rollers are located in co-operating oppositely inclined angularly spaced recesses in the adjacent faces of the pressure plates, and the application of the brake is initiated by moving the pressure plates angularly in opposite directions, the pressure plates then moving apart from a tendency for the balls or rollers to ride up ramps defined by the edges of the recesses so that the pressure plates move into engagement with the friction discs which are urged, in turn, into engagement with the braking surfaces, the pressure plates being carried round with the friction discs until one is arrested by the engagement of a lug on the plate with a drag-taking stop abutment in the housing, and the continued angular movement of the other pressure plate provided a servo action, the pressure plates being moved angularly in opposite directions by means of an actuator (6) comprising an hydraulic piston and cylinder assembly (9, 11, 12) of which the main axis is tangential to the axis of the plates, characterised in that an automatic adjuster (29) acts between the two relatively movable components (11, 12) of the assembly (6) to determine their relative positions and, in turn, the relative positions of the pressure plates, the automatic adjuster comprising an axially extending adjuster member (20) having a pawl and ratchet engagement with one of the components (12), and a lost-motion connection with the other of the components (11), relative movement between the two components in a first direction through a distance greater than that required to take up the lost-motion, and indicative of excessive wear of the friction linings, causing the pawl (25) to ride over one ratchet tooth (28), whereafter upon release of the brake, the new relative positions of the pawl and the ratchet determine an adjusted release position for the components, and bias and release means (33, 34, 35) operative normally to maintain said pawl and ratchet engagement are releasable from the exterior of the piston and cylinder assembly to permit release of said pawl and ratchet engagement, whereafter the two components can be moved in a second direction opposite to the first to enable the adjuster to be re-set, the bias and release means comprising a member (33) which projects through a radial bore (31) in the wall of the cylinder (9) and co-operates with the adjuster member.

2.   A disc brake according to claim 1, characterised in that the member (33) defining the bias and release means co-operates with the adjuster member (21) directly through a spring-loaded strut (35).

3.   A disc brake according to claim 1, characterised in that the member defining the bias and release means co-operates with the adjuster member indirectly through a spring-loaded strut (35).

4.   A disc brake according to any of the preceding claims, characterised in that the member (33) has a screw-threaded engagement in the radial bore (31).

5.   A disc brake according to any of the preceding claims, characterised in that the member (33) comprises a forward extension on a conventional bleed screw (30).

6. A disc brake as claimed in any preceding claim, characterised in that the bias and release means has an abutment face (45) engageable directly with the adjuster member (21) to urge the pawl (25) into engagement with the ratchet teeth (28).

7. A disc brake as claimed in claim 6, characterised in that the adjuster member (20) is tubular and the bias and release means has a lost motion slidable coupling with the adjuster member arranged positively to withdraw the pawl from the teeth as the bias and release means is moved relatively away from the adjuster member.

8. A disc brake as claimed in claim 7, characterised in that the tubular member (20) has an axially extending elongate slot (40), and the forward end of the bias and release means has an extension (44) carrying a head (43) at its free end, the head being received in the slot to couple the member to the bias and release means.

9. A disc brake according to any of the preceding claims characterised in that the piston and cylinder assembly comprises first and second opposed pistons (11, 12) working in a common bore (10) in a cylinder (9), the adjuster member (21) is formed at one end with a pawl (25) for releasable engagement with ratchet teeth (28) in an internal blind bore in one of the pistons (12), and at the opposite end with radial flange or head (26) received in a recess (23) in the adjacent inner end of the other piston (11), the bias and release means (33) normally acting to bias the adjuster member to one side of the main axis of the cylinder bore to effect engagement of the pawl with the teeth and retain the flange or head in the recess normally spaced from an inwardly directed radial flange (24) at its inner end to define the said lost-motion connection.

FIG.1.

FIG.2.

FIG.3.

European Patent
Office

**EUROPEAN SEARCH REPORT**

0235994
Application number

EP 87 30 1293

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 139 518 (LUCAS INDUSTRIES PUBLIC LTD CO.) * Page 4, line 3 - page 7, line 22; figures 1-3 * | 1 | F 16 D 65/54<br>F 16 D 55/18<br>B 60 T 11/30 |
| A | PATENT ABSTRACTS OF JAPAN, vol. 9, no. 67 (M-366)[1790], 27th March 1985; & JP-A-59 200 823 (HINO JIDOSHA KOGYO K.K.) 14-11-1984 (Cat. A,D) | 1 | |
| A | DE-A-2 640 093 (H. KLAUE) | | |
| A | CH-A- 359 363 (H. KLAUE) | | |
| A | PATENT ABSTRACTS OF JAPAN, vol. 9, no. 42 (M-359)[1765], 22nd February 1985; & JP-A-59 183 124 (HINO JIDOSHA KOGYO K.K.) 18-10-1984 | | TECHNICAL FIELDS SEARCHED (Int. Cl.4)<br><br>F 16 D 65/00<br>F 16 D 55/00<br>B 60 T 11/00 |
| A | DE-U-8 435 212 (WEBER S.p.A.) | | |
| A | DE-A-1 655 384 (ALFRED TEVES) | | |

--- -/-

The present search report has been drawn up for all claims

| Place of search | Date of completion of the search | Examiner |
|---|---|---|
| THE HAGUE | 11-06-1987 | BRAEMS C.G.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-2 527 156 (V.M. SCHUSTER) | | |
| | --- | | |
| A | GB-A- 731 757 (H. & T. INDUSTRIES LTD) | | |
| | ----- | | |

TECHNICAL FIELDS SEARCHED (Int. Cl.4)

The present search report has been drawn up for all claims

| Place of search | Date of completion of the search | Examiner |
|---|---|---|
| THE HAGUE | 11-06-1987 | BRAEMS C.G.I. |